# EUROPÄISCHE PATENTANMELDUNG

(11) **EP 1 157 729 A1**
(43) Veröffentlichungstag der Anmeldung: **28.11.2001**
(21) Anmeldenummer: 00110807.5
(22) Anmeldetag: 22.05.2000
(51) Int. Cl.: B01D 53/00, B01D 5/00, B01D 53/04

(54) **Verfahren und Anlage zur Beseitigung von in einem Gasstrom gebundenen organischen Flüssigkeiten aus dem Gasstrom**

(71) Anmelder: Munters Euroform GmbH, 52072 Aachen (DE)
(72) Erfinder: Gröver, Dipl.-Ing. Christian, 52134 Herzogenrath (DE)
(74) Vertreter: Patentanwälte Hauck, Graalfs, Wehnert, Döring, Siemons

(57) **Zusammenfassung**

Es werden ein Verfahren und eine Anlage zur Beseitigung von in einem Gasstrom gebundenen organischen Flüssigkeiten aus dem Gasstrom beschrieben. Das Verfahren besitzt eine Vorfiltrationsstufe (3), eine Konzentrationsstufe (4) und eine Aufbereitungsstufe. Durch die vorgeschaltete Konzentrationsstufe kann auch mit Gasströmen, die eine große Gasmenge und eine relativ kleine Beladung mit gebundenen organischen Flüssigkeiten aufweisen, eine effiziente Ausnutzung der nachfolgenden Aufbereitungsstufe erfolgen.

## Beschreibung

Die vorliegende Erfindung betrifft ein Verfahren und eine Anlage zur Beseitigung von in einem Gasstrom gebundenen organischen Flüssigkeiten aus dem Gasstrom.

Ein derartiges Verfahren ist bereits in der europäischen Patentanmeldung 99115550.8 vorgeschlagen worden. Bei dem bekannten Verfahren wird die Temperatur des Gasstromes zum Auskondensieren der gebundenen organischen Flüssigkeiten abgesenkt, wonach die auskondensierten gebunden organischen Flüssigkeiten und mitauskondensiertes Wasser aus dem Gasstrom abgeschieden werden. Der Gasstrom wird dann durch einen Diffusionsfilter geführt, und der restliche gebundene organische Flüssigkeitsanteil sowie mitauskondensiertes Wasser werden abgetrennt. Dieses vom Gasstrom abgetrennte Gemisch wird schließlich separiert.

Bei diesem Verfahren wird somit mit einer Kühlstufe und einer Diffusionsstufe gearbeitet, um die verunreinigenden Substanzen abzutrennen. Die Kühlstufe kann dabei in mehrere einzelne Kühlstufen unterteilt sein.

Das vorstehend beschriebene Verfahren hat den Vorteil, daß als Endprodukte des Verfahrens die vom Gasstrom abgetrennten organischen Flüssigkeiten und Wasser im separierten Zustand anfallen. Diese Substanzen können der Wiederverwertung oder Wiederaufbereitung zugeführt werden. Damit arbeitet das erfindungsgemäße Verfahren besonders wirtschaftlich. Die dem Gasstrom entzogenen organischen Verbindungen werden nicht in ihren Eigenschaften beeinflußt und können je nach Anlage und Konfiguration direkt dem vorgeschalteten Prozeß wieder zugeführt, anderweitig verwendet oder aufbereitet werden. Das Verfahren gestattet eine Anpassung der Abscheideleistung in weiten Bereichen und eignet sich insbesondere für alle derzeit auf dem Markt befindlichen (nichtwasserlöslichen) Lösungsmittel und Weichmacher:

Der Erfindung liegt die Aufgabe zugrunde, ein Verfahren und eine Anlage der eingangs wiedergegebenen Art zu schaffen, die sich durch eine besonders große Wirtschaftlichkeit auszeichnen.

Diese Aufgabe wird erfindungsgemäß bei einem Verfahren der angegebenen Art durch die folgenden Schritte gelöst:
a. Vorfiltern des Gasstromes;
b. Konzentrieren des Gasstromes zur Erhöhung seiner Beladung mit organischen Flüssigkeiten;
c. Absenken der Temperatur des konzentrierten Gasstromes zum Auskondensieren der gebundenen organischen Flüssigkeiten;
d. Abscheiden der gemäß Schritt c. auskondensierten gebundenen organischen Flüssigkeiten und von mitauskondensiertem Wasser aus dem Gasstrom;
e. Führen des Gasstromes durch einen Diffusionsfilter und Abtrennen des restlichen gebundenen organischen Flüssigkeitsanteiles und von mitauskondensiertem Wasser; und
f. Separieren des gemäß Schritt e. aus dem Gasstrom abgetrennten Gemisches aus auskondensierten gebundenen organischen Flüssigkeiten und auskondensiertem Wasser.

Das erfindungsgemäße Verfahren zeichnet sich gegenüber dem bereits vorgeschlagenen Verfahren im wesentlichen dadurch aus, daß es vor der eigentlichen Aufbereitung über Temperaturabsenkung und Filtration des Gasstromes eine Konzentrationsstufe mit vorgeschalteter Vorfiltrationsstufe aufweist. Durch die Einschaltung einer derartigen Konzentrationsstufe gelingt es, den Aufwand für die nachfolgende Aufbereitungsstufe (Kühleinrichtungen, Diffusitonsfilter etc.) wesentlich zu verringern, und zwar insbesondere dann, wenn es um die Reinigung eines Gasstromes geht, der eine große Gasmenge und eine geringe Beladung mit organischen Flüssigkeiten aufweist. Derartige Gasströme würden ohne die erfindungsgemäß eingeschaltete Konzentrationsstufe eine relativ aufwendig ausgestaltete Aufbereitungsstufe mit aufwendigen Kondensations- und Diffusionsfiltereinrichtungen benötigen. Durch die eingeschaltete Konzentrationsstufe kann dieser Aufwand verringert werden.

In der Konzentrationsstufe wird die Beladung des Gasstromes mit den abzutrennenden organischen Flüssigkeiten erhöht. Dadurch wird der die nachfolgende Aufbereitungsstufe passierende Volumenstrom verringert, so daß die entsprechenden Einrichtungen weniger aufwendig ausgestaltet werden können.

Erfindungsgemäß wird vor dem Konzentrationsschritt der Gasstrom vorgefiltert. Ein derartiger Schritt ist zwingend erforderlich, um aus dem Gasstrom, der dem Konzentrationsschritt zugeführt wird, Schmutzpartikel etc. zu entfernen.

Die Ausgestaltung des Vorfiltrationsschrittes ist dabei keinen Beschränkungen ausgesetzt. So kann der Gasstrom beispielsweise durch einen Coalescer, Demister und/oder Tropfenabscheider geführt werden.

Der Hauptschritt des erfindungsgemäßen Verfahrens ist der Konzentrationsschritt. Vorzugsweise wird beim Konzentrieren des Gasstromes so vorgegangen, daß dieser zum Konzentrieren aufgeteilt wird, ein Teilstrom über ein flüchtige organische Bestandteile adsorbierendes Material geführt und hierdurch gereinigt wird und der andere Teilstrom im Gegenstrom über das Material mit den adsorbierten flüchtigen organischen Substanzen zurückgeführt und hierdurch konzentriert wird. Durch diese Vorgehensweise wird ein Teil des zu reinigenden Gasstromes durch Adsorption am entsprechenden Material, beispielsweise Zeolith, sofort gereinigt und kann dem weiteren Verfahren entzogen werden. Lediglich der andere Teilstrom wird im Verfahren weiterverarbeitet und im Gegenstrom über das entsprechende Material, das mit den adsorbierten flüchtigen organischen Substanzen versehen ist, zurückgeführt, wodurch das Material desorbiert und die Beladung des Teilstromes mit den Substanzen erhöht wird. Es hat somit eine Konzentration stattgefunden, wodurch die nachfolgenden Einrichtungen volumenmäßig entlastet werden.

Zweckmäßigerweise befindet sich das flüchtige organische Bestandteile adsorbierende Material in einem rotierenden Rotor, so daß die Teilströme des Gasstromes immer neue Abschnitte des Rotors passieren.

Eine derartige Verfahrensweise zum Konzentrieren eines Gas-Stromes ist grundsätzlich bekannt, jedoch in ihrer Anwendung bei dem erfindungsgemäßen Verfahren neu. Bei dem bekannten Verfahren (Zeol Rotor Concentrators with hydrophobic Zeolites der Firma Munters Corporation, Amesbury, Massachusetts, USA) wird ein Strom erhitzter Luft durch einen Regenerationssektor des Rotors geführt, was zu einer Desorption des Materiales (Zeolith) führt. Der dadurch gebildete mit Verunreinigungen konzentrierte Luftstrom wird einem Oxidator zugeführt, in dem die flüchtigen organischen Substanzen in Wasserdampf und CO₂ überführt werden. Der Energiegehalt dieser Substanzen unterstützt dabei den Oxidationsprozeß.

Bei der vorliegenden Erfindung wird der konzentrierte Teilgasstrom nicht oxidiert, sondern den vorstehend erwähnten weiteren Verfahrensschritten, nämlich einem Kondensationsschritt und einem nachfolgenden Diffusionsfiltrationsschritt, unterzogen. Es findet somit eine Aufbereitung des Gasstromes mit physikalischen Mitteln und keine chemische Reaktion desselben statt.

Der Regenerationssektor des das Adsorptionsmaterial enthaltenen Rotors entspricht vorzugsweise etwa einem Viertel der Rotorfläche. Dadurch, daß sich der Rotor langsam dreht, beispielsweise 1 bis 6 Umdrehungen pro Stunde durchführt, gelangt immer neues Material in den Regenerationssektor und wird dort vom Gasstrom desorbiert. Das gereinigte Material gelangt dann wieder in den vom zu reinigenden Gasstrom durchströmten Rotorbereich, so daß es erneut flüchtige organische Substanzen aufnehmen kann.

Damit das Rotormaterial von dem anderen Teilgasstrom desorbiert werden kann, wird dieser vorzugsweise vor dem Konzentrieren aufgeheizt.

Der auf diese Weise konzentrierte Teilgasstrom kann dann sämtlichen Verfahrensschritten unterzogen werden, wie sie in der vorstehend erwähnten europäischen Patentanmeldung 99115550.8 beschrieben sind. Es ist auch möglich, den konzentrierten Teilstrom nach dem Konzentrieren mit einem anderen zu reinigenden Gasstrom zu vereinigen, der insbesondere eine geringe Gasmenge und eine hohe Beladung mit organischen Flüssigkeiten aufweist. Der vereinigte Gasstrom wird dann den weiteren Verfahrensschritten des erfindungsgemäßen Verfahrens zugeführt. Wenn der andere zu reinigende Gasstrom eine geringe Gasmenge und eine hohe Beladung mit organischen Flüssigkeiten aufweist, ist eine Konzentration desselben nicht erforderlich.

Wenn in der weiteren Beschreibung vom "konzentrierten Gasstrom" gesprochen wird, so ist hiermit entweder der konzentrierte Teilgasstrom allein oder ein aus einer Vereinigung des Teilgasstromes mit einem anderen Gasstrom resultierender Gasstrom gemeint.

Wie erwähnt, können sämtliche Verfahrensschritte der erwähnten älteren europäischen Patentanmeldung durchgeführt werden. Die diesbezügliche Offenbarung dieser älteren Anmeldung wird durch Bezugnahme in die vorliegende Offenbarung eingearbeitet.

Insbesondere wird auch bei dem konzentrierten Gasstrom vorzugsweise die Temperatur desselben stufenweise abgesenkt, wobei nach jeder Stufe die auskondensierten gebundenen organischen Flüssigkeiten aus dem Gasstrom abgeschieden werden. Zweckmäßigerweise wird die Temperatur des Gasstromes in einer ersten Stufe auf einen Wert über dem Taupunkt von Wasserdampf abgesenkt, während die Temperatur des Gasstromes in einer zweiten Stufe auf ≤ 6 °C abgesenkt wird. Das auskondensierte Gemisch wird vorzugsweise zur Separierung einer Koaleszenzabscheidung unterzogen.

Die vorstehend genannte Aufgabe wird ferner erfindungsgemäß durch eine Anlage zur Beseitigung von in einem Gasstrom gebundenen organischen Flüssigkeiten gelöst, die einen Vorfilter, einen Konzentrator, einen Wärmetauscher zum Absenken der Gastemperatur, einen dem Wärmetauscher nachgeordneten Tropfenabscheider, einen Diffusionsfilter und eine Phasentrennvorrichtung umfaßt. Der Konzentrator ist vorzugsweise als Rotor-Konzentrator ausgebildet, insbesondere als Munters Zeol Rotor Concentrator, wie vorstehend erwähnt.

Was die übrigen Bauteile der Anlage anbetrifft, so können diese so ausgebildet sein, wie in der vorstehend erwähnten europäischen Patentanmeldung beschrieben.

Die Erfindung wird nachfolgend anhand eines Ausführungsbeispieles in Verbindung mit der Zeichnung im einzelnen erläutert. Es zeigen:

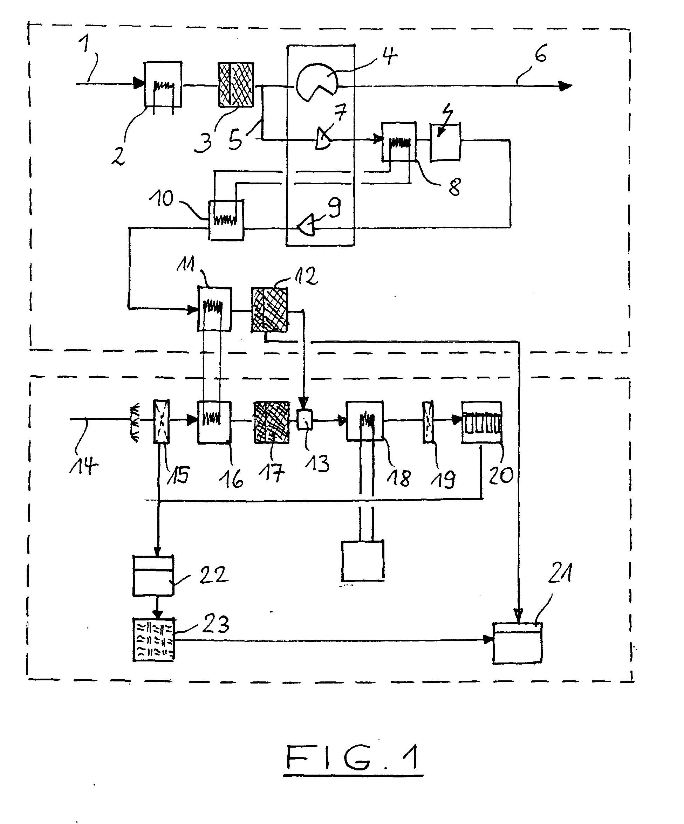

- Figur 1: in schematischer Weise den Aufbau einer Anlage zur Beseitigung von in einem Gasstrom gebundenen organischen Flüssigkeiten; und
- Figur 2: schematisch den Aufbau der Konzentrationsstufe der Anlage.

Bei der in den Figuren dargestellten Anlage handelt es sich um eine solche, die zur Beseitigung eines in einem Gasstrom mitgeführten Lösungsmittels dient. Im nachfolgenden Text wird daher ausschließlich von der Beseitigung von Lösungsmittel gesprochen.

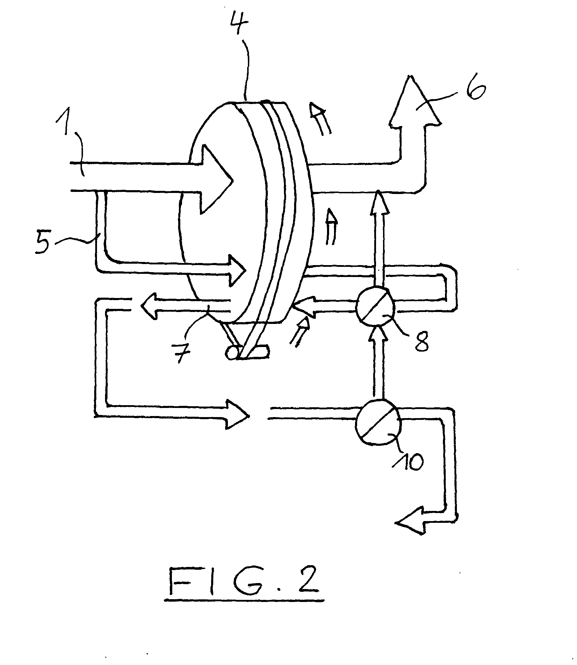

Ein Lösungsmittel enthaltender Gasstrom 1 iwird in die Anlage eingeführt und passiert als erstes einen Wärmetauscher 2, mit dem die Temperatur des heißen Gasstromes abgesenkt wird. Der Gasstrom gelangt dann in einen Coalescer/Demister 3, der als Vorfilter der Anlage dient und die Aufgabe hat, die Flüssigkeitsmenge und die Menge an sonstigen Verunreinigungen (Schmutz etc.) im Gasstrom zu reduzieren, bevor dieser der Konzentrationsstufe zugeführt wird. Die nachfolgende Konzentrationsstufe weist einen Rotor-Konzentrator 4 auf, dessen Aufbau und Funktionsweise genauer in Verbindung mit Figur 2 erläutert werden. Vor dem Eindringen in den Rotor-Konzentrator 4 wird der Gasstrom aufgeteilt, wobei ein erster Gasstrom etwa 3/4 des Rotorkonzentrators 4 passiert, während ein abgetrennter zweiter Gasstrom 5 etwa 1/4 dieses Rotor-Konzentrators durchläuft. Dieses Viertel ist in der Figur mit 7 bezeichnet.

Der Rotor-Konzentrator 4 ist als ein sich drehendes Rad ausgebildet, das ein Material aufweist, das die im Gasstrom 1 enthaltenen flüchtigen organischen Substanzen, d.h. das Lösungsmittel, adsorbiert. Ein Beispiel für ein derartiges Material ist Zeolith. Der Gasstrom wird daher durch das Passieren des Rotor-Konzentrators 4 gereinigt und kann als gereinigter Gasstrom 6 an die Atmosphäre abgegeben werden. Der abgezweigte Teilgasstrom 5 wird nach dem Passieren des Rotor-Konzentrators (von etwa einem Viertel der Fläche desselben, wie bei 7 gezeigt) in einem Wärmetauscher 8 erhitzt und dann im Gegenstrom erneut durch den Rotor-Konzentrator geführt, und zwar durch einen Regenerationsabschnitt 9 desselben, der ebenfalls etwa ein Viertel der Rotorfläche entspricht. Hierdurch erfolgt eine Desorption des Rotormateriales und damit ein Anstieg der Konzentration des Lösungsmittels im Gasstrom. Durch die erfolgte Desorption kann das Rotormaterial wieder Lösungsmittel des zugeführten Gasstromes adsorbieren.

Der konzentrierte Gasstrom gelangt nach dem Passieren des Konzentrators durch zwei Wärmetauscher 10 und 11, mit denen er auf eine gewünschte Prozeßtemperatur gebracht werden kann. Danach passiert der Gasstrom einen Coalescer/Demister 12 als weitere Reinigungsstufe. Schließlich gelangt er zu einer Vereinigungsstelle 13.

Der vorstehend beschriebene Gasstrom 1 zeichnet sich dadurch aus, daß er eine große Gasmenge und eine relativ kleine Beladung mit Lösungsmittel aufweist. Durch den Konzentrationsvorgang wird das Gasvolumen erniedrigt und die Beladung mit Lösungsmittel erhöht. Auf diese Weise kann die nachfolgende Aufbereitungsstufe kostengünstiger aufgebaut sein und wirtschaftlicher arbeiten.

Bei dem hier beschriebenen Ausführungsbeispiel wird der konzentrierte Gasstrom mit einem zweiten Gasstrom 14 vereinigt, der sich von Hause aus durch ein kleines Gasvolumen mit einer hohen Beladung mit Lösungsmittel auszeichnet. Dieser Gasstrom 14 wird daher keiner Konzentration, sondern lediglich einer nachfolgend beschriebenen Aufbereitung unterzogen. An der Vereinigungsstelle 13 werden beide Gasströme miteinander vereinigt.

Der Gasstrom 14 passiert als erstes einen mit Wasser besprühten Tropfenabscheider 15, mit dem größere Tropfen abgeschieden werden. Danach gelangt der Gasstrom 14 durch einen Wärmetauscher 16 zum Abkühlen in einen Coalescer/Demister 17, der als weitere Reinigungsstufe dient. Schließlich trifft er in der Vereinigungsstelle 13 mit dem konzentrierten Gasstrom zusammen.

Der vereinigte Gasstrom gelangt dann in einen Wärmetauscher 18, der eine von Kühlwasser durchflossene Rohrschlange aufweist. Der Gasstrom durchströmt den Wärmetauscher und tritt dabei mit der Kühlschlange in Kontakt. Dabei kondensiert ein weiterer Teil des im Gasstrom enthaltenen Lösungsmittels aus. Die im Gasstrom mitgeführten Lösungsmitteltröpfchen werden vom nachgeschalteten Tropfenabscheider 19 aufgefangen und vom Gasstrom abgeschieden. Vom Tropfenabscheider 19 gelangt der Gasstrom in einen Diffusionsfilter 20 (Kerzenfilter), der eine Abtrennung des restlichen Lösungsmittels (Tröpfchendurchmesser < 1 *µ*m) sowie des auskondensierten Wassers bewirkt.

Das auskondensierte Wasser sowie die auskondensierten Lösungsmittel bzw. ein Gemisch hiervon gelangen vom Tropfenabscheider 15, Coalescer/Demister 17, Tropfenabscheider 19 und Diffusionsfilter 20 in einen Behälter 22 und von dort in einen Koaleszenzabscheider 23, in dem eine Trennung des Lösungsmittels vom Wasser erfolgt. Dieses wird in einem Behälter 21 aufgefangen und kann erneut verwendet werden.

Figur 2 zeigt eine schematische detaillierte Darstellung der Konzentrationsstufe. Der verwendete Rotor-Konzentrator 4 dreht sich mit sechs Umdrehungen pro Stunde und wird vom Gasstrom 1 sowie einem hiervon abgezweigten Teilgasstrom 5 passiert. Das im Rotor-Konzentrator 4 enthaltene Zeolith-Material adsorbiert das im Gasstrom enthaltene Lösungsmittel. Der gereinigte Gasstrom 6 kann dann an die Atmosphäre abgegeben werden. Der abgezweigte Teilgasstrom 5 wird nach dem Passieren des Rotor-Konzentrators 4 in einem Wärmetauscher 8 erhitzt, um bei einem erneuten Passieren des Rotor-Konzentrators 4 eine desorbierende Wirkung ausüben zu können. Der Teilgasstrom passiert dabei einen Regenerationsabschnitt 7 des Rotor-Konzentrators, der etwa einem Viertel der gesamten Rotorfläche entspricht. Durch die erfolgte Desorption wird dieser Teilgasstrom konzentriert, so daß die nachfolgende Aufbereitungsstufe wesentlich effektiver genutzt werden kann.

## Patentansprüche

1. Verfahren zur Beseitigung von'in einem Gasstrom gebundenen organischen Flüssigkeiten aus dem Gasstrom mit den folgenden Schritten:
a. Vorfiltern des Gasstromes;
b. Konzentrieren des Gasstromes zur Erhöhung seiner Beladung mit organischen Flüssigkeiten;
c. Absenken der Temperatur des konzentrierten Gasstromes zum Auskondensieren der gebundenen organischen Flüssigkeiten;
d. Abscheiden der gemäß Schritt c. auskondensierten gebundenen organischen Flüssigkeiten und von mitauskondensiertem Wasser aus dem Gasstrom;
e. Führen des Gasstromes durch einen Diffusionsfilter und Abtrennen des restlichen gebundenen organischen Flüssigkeitsanteiles und von mitauskondensiertem Wasser; und
f. Separieren des gemäß Schritt e. aus dem Gasstrom abgetrennten Gemisches aus auskondensierten gebundenen organischen Flüssigkeiten und auskondensiertem Wasser.

2. Verfahren nach Anspruch 1, **dadurch gekennzeichnet, daß** der Gasstrom eine große Gasmenge und eine geringe Beladung mit organischen Flüssigkeiten (Aerosolen) aufweist.

3. Verfahren nach Anspruch 1 oder 2, **dadurch gekennzeichnet, daß** der Gasstrom zum Vorfiltern durch einen Demister, Coalescer und/oder Tropfenabscheider geführt wird.

4. Verfahren nach einem der vorangehenden Ansprüche, **dadurch gekennzeichnet, daß** der Gasstrom zum Konzentrieren aufgeteilt, ein Teilstrom über ein flüchtige organische Bestandteile adsorbierendes Material geführt und hierdurch gereinigt wird und der andere Teilstrom im Gegenstrom über das Material mit den adsorbierten flüchtigen organischen Substanzen zurückgeführt und hierdurch konzentriert wird.

5. Verfahren nach Anspruch 4, **dadurch gekennzeichnet, daß** sich das flüchtige organische Bestandteile adsorbierende Material in einem rotierenden Rotor befindet, so daß die Teilströme des Gasstromes immer neue Abschnitte des Rotors passieren.

6. Verfahren nach Anspruch 4 oder 5, **dadurch gekennzeichnet, daß** der andere Teilstrom vor dem Konzentrieren aufgeheizt wird.

7. Verfahren nach einem der vorangehenden Ansprüche, **dadurch gekennzeichnet, daß** der konzentrierte Teilstrom nach dem Konzentrieren mit einem anderen zu reinigenden Gasstrom vereinigt wird, der insbesondere eine geringe Gasmenge und eine hohe Beladung mit organischen Flüssigkeiten aufweist.

8. Verfahren nach einem der vorangehenden Ansprüche, **dadurch gekennzeichnet, daß** die Temperatur des konzentrierten Gasstromes stufenweise abgesenkt wird, wobei nach jeder Stufe die auskondensierten gebundenen organischen Flüssigkeiten aus dem Gasstrom abgeschieden werden.

9. Verfahren nach einem der vorangehenden Ansprüche, **dadurch gekennzeichnet, daß** die Temperatur des konzentrierten Gasstromes in einer ersten Stufe auf einen Wert über dem Taupunkt von Wasserdampf abgesenkt wird.

10. Verfahren nach einem der vorangehenden Ansprüche, **dadurch gekennzeichnet, daß** die Temperatur des konzentrierten Gasstromes in einer zweiten Stufe auf ≤ 6 °C abgesenkt wird.

11. Verfahren nach einem der vorangehenden Ansprüche, **dadurch gekennzeichnet, daß** das aus dem konzentrierten Gasstrom abgeschiedene Gemisch aus auskondensierten gebundenen organischen Flüssigkeiten und aus kondensiertem Wasser zur Separierung einer Koaleszenzabscheidung unterzogen wird.

12. Anlage zur Beseitigung von in einem Gasstrom gebundenen organischen Flüssigkeiten mit einem Vorfilter (3), einem Konzentrator (4), einem Wärmetauscher (18) zum Absenken der Gastemperatur zum Auskondensieren von im Gasstrom gebundenen organischen Flüssigkeiten, einem dem Wärmetauscher (18) nachgeordneten Tropfenabscheider (19) zur Abscheidung der auskondensierten Flüssigkeiten und von mitauskondensiertem Wasser aus dem Gasstrom, einem Diffusionsfilter (20) zum Abtrennen des restlichen gebundenen organischen Flüssigkeitsanteiles und von mitauskondensiertem Wasser und einer Phasentrennvorrichtung (23) zur Separierung der auskondensierten organischen Flüssigkeiten und des mitauskondensierten Wassers.

13. Anlage nach Anspruch 12, **dadurch gekennzeichnet, daß** der Konzentrator (4) als Rotor-Konzentrator ausgebildet ist.
